# EUROPEAN PATENT SPECIFICATION

(11) **EP 3 361 262 B1**
(45) Date of publication and mention of the grant of the patent: **02.12.2020**
(21) Application number: 16853708.2
(22) Date of filing: 06.10.2016
(51) Int. Cl.: G01N 35/04, B65G 47/88, B65G 47/14

(54) **CONTAINER SUPPLYING UNIT AND AUTOMATIC ANALYSIS DEVICE**
BEHÄLTERZUFÜHREINHEIT UND AUTOMATISCHE ANALYSEVORRICHTUNG
UNITÉ D'ALIMENTATION DE RÉCIPIENT ET DISPOSITIF D'ANALYSE AUTOMATIQUE

(30) Priority: 07.10.2015 JP 2015199587
(43) Date of publication of application: 15.08.2018
(73) Proprietor: JEOL Ltd., Akishima-shi Tokyo 196-8558 (JP); Fujirebio Inc., Tokyo 163-0410 (JP)
(72) Inventor: NAKAMURA Mizuki, Akishima-shi Tokyo 196-8558 (JP)
(74) Representative: Boult Wade Tennant LLP
(86) International application number: PCT/JP2016/079820
(87) International publication number: WO 2017/061556

(56) References cited:
- WO-A1-2014/129397
- JP-A- S 571 632
- JP-A- H03 272 904
- JP-A- H07 101 537
- JP-A- 2007 309 792
- JP-A- 2007 309 792
- JP-A- 2014 160 028
- JP-U- H0 542 215
- JP-U- H02 146 368
- US-A- 1 496 444
- US-A- 3 743 091
- US-A- 3 799 395

## Description

### Technical Field

The present invention relates to automatic analysis devices that include container supplying units.

### Background Art

There have been known automatic analysis devices that perform quantitative measurement of specific substances contained in samples that are biological samples such as blood and urine. Disposable cuvettes (disposable reaction containers) that contain samples and reagents are used in the automatic analysis devices. Such automatic analysis devices include, for example, a reaction unit in which the cuvettes are arranged, a dispenser that dispenses the sample and the reagent into the cuvettes arranged in the reaction unit, and a container supplying unit that supplies empty cuvettes to the reaction unit.

In Japanese Patent Application Publication JP2007309792A, there is described a sample analyzer according to the preamble of claim 1 including a first hopper, which stores a plurality of cuvettes for preparing the sample, a cuvette feed-out part for feeding a plurality of the cuvettes out of the first hopper, a second hopper for storing a plurality of the cuvettes fed out by the cuvette feed-out part, a feed rail for feeing the cuvettes out of the second hopper one by one, a sensor for detecting the feed-out state of the cuvettes due to the feed-rail, a control part for controlling the operation of the cuvette feed-out part on the basis of the detection result of the sensor and an analyzing mechanism part for preparing the sample in the cuvettes fed out by the feed-rail. The control part has the function of analyzing the prepared sample.

PTL 1 describes a technique relating to a container supplying device that includes a storing part in which containers introduced into the storing part through an introduction opening are stored. The container supplying device described in PTL 1 includes a storing part, a feeding part, a carrying-out part, and a disposing part. The feeding part feeds the containers existing at the bottom of the storing part. The carrying-out part carries out the containers fed by the feeding part. The disposing part disposes at a specified position the containers carried out by the carrying-out part.

Furthermore, with the technique described in PTL 1, the containers are taken out one after another at a leading position of an aligning rail. Thus, a rotating feeding part having a rotating table is provided as the disposing part. The rotating table has U-shaped cuts, the containers are fitted into the cuts, and the rotating table is rotated, thereby the containers are moved to a feeding position where the containers are fed to the outside.

### Citation List

### Patent Literature

PTL 1: Japanese Unexamined Patent Application Publication No. 2012-141226

### Summary of Invention

### Technical Problem

However, with the technique described in PTL 1, for taking out the containers one after another at the leading position of the aligning rail, the containers need to be moved from the aligning rail to the rotating table. Accordingly, when the containers are moved from the aligning rail to the rotating table, the orientation of the containers becomes unstable. Thus, there is a problem in that jamming of the containers on the rotating table or the aligning rail easily occurs.

An object of the present invention is, in consideration of the above-described problem, to provide a container supplying unit with which the orientation of containers to be supplied can be constantly maintained in a stable state and to provide an automatic analysis device that includes this container supplying unit.

### Solution to Problem

In order to address the above-described problem and to achieve the object of the present invention, there is provided an automatic analysis device with the features of claim 1.

### Advantageous Effects of Invention

With the automatic analysis device according to the present invention, the orientation of the containers to be supplied can be constantly maintained in a stable state.

### Brief Description of Drawings

[Fig. 1] Fig. 1 is a schematic view illustrating the structure of an automatic analysis device according to an example of a first embodiment of the present invention.
[Fig. 2] Fig. 2 is a perspective view illustrating a container used in the automatic analysis device according to the example of the first embodiment of the present invention.
[Fig. 3] Fig. 3 is a perspective view (No. 1) illustrating a container supplying unit according to the example of the first embodiment of the present invention.
[Fig. 4] Fig. 4 is a perspective view (No. 2) illustrating the container supplying unit according to the example of the first embodiment of the present invention.
[Fig. 5] Fig. 5 is a side view illustrating the container supplying unit according to the example of the first embodiment of the present invention.
[Fig. 6] Fig. 6 is a perspective view illustrating a main part of an aligning rail of the container supplying unit according to the example of the first embodiment of the present invention.
[Fig. 7] Fig. 7 is a sectional view illustrating a main part of the aligning rail of the container supplying unit according to the example of the first embodiment of the present invention.
[Fig. 8] Fig. 8 is a plan view illustrating a main part of the aligning rail of the container supplying unit according to the example of the first embodiment of the present invention.
[Fig. 9] Fig. 9 is a perspective view illustrating a shutter mechanism of the container supplying unit according to the first embodiment of the present invention.
[Fig. 10] Fig. 10 is an explanatory view illustrating operation of the shutter mechanism of the container supplying unit according to the example of the first embodiment of the present invention.
[Fig. 11] Fig. 11 is an explanatory view illustrating the operation of the shutter mechanism of the container supplying unit according to the example of the first embodiment of the present invention.
[Fig. 12] Fig. 12 is an explanatory view illustrating a state in which two containers are disposed at a feeding position of the container supplying unit according to the example of the first embodiment of the present invention.
[Fig. 13] Fig. 13 is a perspective view illustrating a shutter mechanism according to an example of a second embodiment of the present invention.
[Fig. 14] Fig. 14 is a perspective view illustrating the shutter mechanism according to the example of the second embodiment of the present invention.
[Fig. 15] Fig. 15 is a perspective view illustrating a shutter mechanism according to an example of a third embodiment of the present invention.
[Fig. 16] Fig. 16 is a perspective view illustrating action of the shutter mechanism according to the example of the third embodiment of the present invention.
[Fig. 17] Fig. 17 is a perspective view illustrating a first shutter member of the shutter mechanism according to the example of the third embodiment of the present invention.
[Fig. 18] Fig. 18 is a perspective view illustrating a modification of the first shutter member of the shutter mechanism according to the example of the third embodiment of the present invention.
[Fig. 19] Fig. 19 is a perspective view illustrating a shutter mechanism according to an example of a fourth embodiment of the present invention.
[Fig. 20] Fig. 20 is a side view illustrating the shutter mechanism according to the example of the fourth embodiment of the present invention.

### Description of Embodiments

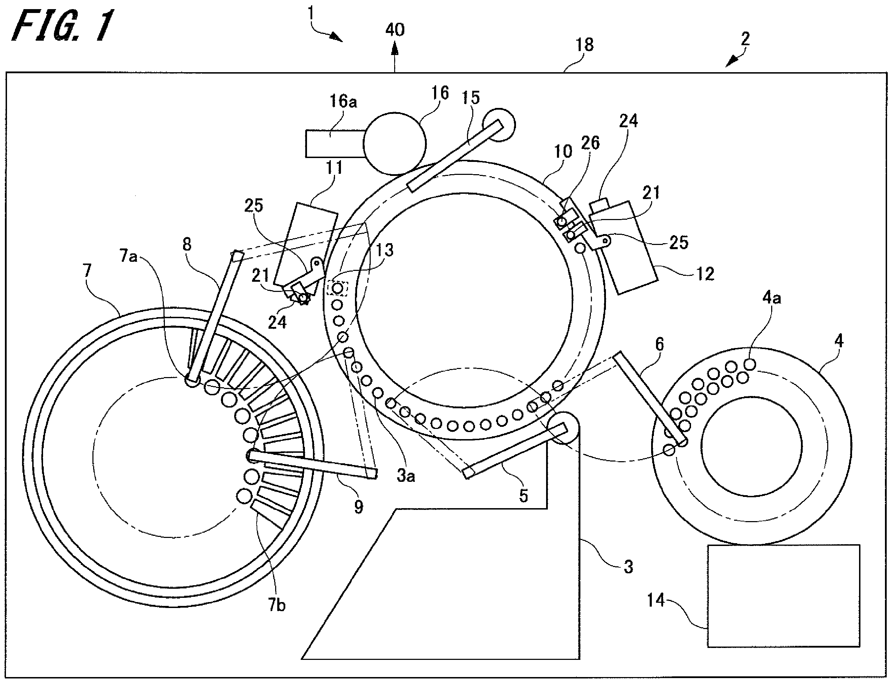

Examples of embodiments of a container supplying unit and an automatic analysis device according to the present invention will be described below with reference to Figs. 1 to 20. The same members are represented by the same reference signs in the drawings.

### 1. An Example of a First Embodiment

### 1-1. Structure of the Automatic Analysis Device

First, the automatic analysis device according to an example of a first embodiment of the present invention is described with reference to Fig. 1.

Fig. 1 is a schematic view illustrating the structure of the automatic analysis device according to the example of the first embodiment of the present invention.

### [Outline of the Automatic Analysis Device]

An immunoanalyzer that analyzes immunity such as an antigen-antibody reaction of a test sample is used for an automatic analysis device 1 of Fig. 1. The automatic analysis device 1 includes a measurement device 2 and a controller 40. The controller 40 controls the entirety of the automatic analysis device 1 including the measurement device 2 and analyzes measurement data output from the measurement device 2.

The automatic analysis device 1 for which the immunoanalyzer is used performs highly sensitive measurement using, for example, chemiluminescent enzyme immunoassay (CLEIA). The CLEIA mainly includes the following steps: a reaction step in which a sample (antigen or antibody) is caused to react with a reagent; a separation step (BF separation) in which a reaction product (bound) and unreacted substances (free) in a reaction container are separated from one another; and a measuring step in which the amount of light emitted by an immune complex generated by a reaction between the reagent and the sample is measured.

### [A Measurement System of the Automatic Analysis Device]

Roughly classified, the measurement device 2 includes a container supplying unit 3, a sample holding unit 4, a container carrying unit 5, a sample dispensing unit 6, a reagent thermal-insulation unit 7, a first reagent dispensing unit 8, a second reagent dispensing unit 9, an immunoenzyme reaction unit 10, a first BF separation unit 11, a second BF separation unit 12, a substrate-solution thermal-insulation storage 14, a container feeding unit 15, and a light emission measurement unit 16. Units including the container supplying unit 3, the sample holding unit 4, and so forth, the substrate-solution thermal-insulation storage 14, the container feeding unit 15, and the light emission measurement unit 16 are housed in a device exterior body 18.

The container supplying unit 3 contains a plurality of containers (cuvettes) 100 and disposes the plurality of containers 100 to a feeding position one by one. Each of the containers 100 having been disposed at the feeding position is carried by the container carrying unit 5 to the immunoenzyme reaction unit 10. The sample and the specified reagent are injected into the container 100 having been carried to the immunoenzyme reaction unit 10.

The container carrying unit 5 includes an arm and a holding portion. The arm is movable upward and downward in the vertical direction and rotatable about a central axis defined by a vertical line passing through a proximal end portion of the arm. The holding portion is provided at a distal end portion of the arm. The container carrying unit 5 holds the container 100 disposed at the feeding position of the container supplying unit 3 by using the holding portion and pivots the arm so as to carry the container 100 to a specified position of the immunoenzyme reaction unit 10 at specified timing.

The sample holding unit 4 includes a substantially cylindrical container-shaped turn table that is open at one end in the axial direction. A plurality of sample containers 4a are contained in the sample holding unit 4. The sample that include, for example, blood or urine collected from subjects is contained in the sample containers 4a. The plurality of sample containers 4a are spaced by a specified gap from one another in the circumferential direction of the sample holding unit 4. The sample holding unit 4 is rotatably supported by a drive mechanism (not illustrated) in the circumferential direction. The drive mechanism (not illustrated) rotates the sample holding unit 4 at a specified speed by a specified angle range at a time in the circumferential direction. In the example of Fig. 1, two rows of the sample containers 4a arranged in the circumferential direction of the sample holding unit 4 are spaced from each other by a specified gap in the radial direction of the sample holding unit 4. The samples may be diluted with a specified diluent.

The sample dispensing unit 6 includes a probe and an arm. The probe that sucks and discharges the sample is attached at a distal end of the sample dispensing unit 6. The arm is movable upward and downward in the vertical direction and rotatable about a central axis defined by a vertical line passing through a proximal end portion of the arm. The sample dispensing unit 6 sucks with the probe the sample from each of the sample containers 4a having been moved to a specified position of the sample holding unit 4, pivots the arm, and, at specified timing, dispenses the sample into the container 100 at the specified position of the immunoenzyme reaction unit 10.

Similarly to the sample holding unit 4, the reagent thermal-insulation unit 7 includes a substantially cylindrical container-shaped turn table that is open at one end in the axial direction. The reagent thermal-insulation unit 7 is supported such that the reagent thermal-insulation unit 7 is rotatable in the circumferential direction by a drive mechanism (not illustrated). The drive mechanism (not illustrated) rotates in both forward and reverse directions the reagent thermal-insulation unit 7 at a specified speed by a specified angle range at a time in the circumferential direction.

The reagent thermal-insulation unit 7 contains first reagent containers 7a and second reagent containers 7b. The first reagent containers 7a are spaced by a specified gap from one another in the circumferential direction of the reagent thermal-insulation unit 7. The second reagent containers 7b are spaced by a specified gap from one another in the circumferential direction of the reagent thermal-insulation unit 7. As a first reagent, a magnetic reagent containing magnetic particles is contained in the first reagent containers 7a. These magnetic particles contained in the magnetic reagent react with a target antigen in the sample. As a second reagent, a labeling reagent (enzyme antibody) is contained in the second reagent containers 7b. This labeling reagent reacts with a reaction product produced by combining the antigen in the sample and the magnetic reagent with each other. A thermal insulation mechanism (not illustrated) maintains the temperature inside the reagent thermal-insulation unit 7 at a specified temperature. Thus, the first reagent (magnetic reagent) contained in the first reagent containers 7a and the second reagent (labeling reagent) contained in the second reagent containers 7b are thermally insulated and kept at the specified temperature.

The first reagent dispensing unit 8 includes a probe and an arm. The probe that sucks and discharges the sample is attached at a distal end of the first reagent dispensing unit 8. The arm is movable upward and downward in the vertical direction and rotatable about a central axis defined by a vertical line passing through a proximal end portion of the arm. The first reagent dispensing unit 8 sucks with the probe the first reagent (magnetic reagent) from each of the first reagent containers 7a having been moved to a specified position of the reagent thermal-insulation unit 7, pivots the arm, and, at specified timing, dispenses the first reagent into the container 100 at a specified position of the immunoenzyme reaction unit 10.

The second reagent dispensing unit 9 has a similar structure to that of the first reagent dispensing unit 8. The second reagent dispensing unit 9 sucks with a probe the second reagent (labeling reagent) from each of the second reagent containers 7b having been moved to a specified position of the reagent thermal-insulation unit 7, pivots an arm, and, at specified timing, dispenses the second reagent into the container 100 at a specified position of the immunoenzyme reaction unit 10.

In the immunoenzyme reaction unit 10, an immunoreaction is performed between the sample in each of the containers 100 arranged in the circumferential direction and the specified reagent corresponding to an analysis item, and an enzyme reaction is performed between a chemiluminescent substrate and an immunocomplex generated in this immunoreaction. Similarly to the sample holding unit 4, the immunoenzyme reaction unit 10 includes a substantially cylindrical container-shaped turn table that is open at one end in the axial direction. The immunoenzyme reaction unit 10 is supported such that the immunoenzyme reaction unit 10 is rotatable in the circumferential direction by a drive mechanism (not illustrated). The drive mechanism (not illustrated) rotates the immunoenzyme reaction unit 10 at a specified speed by a specified angle range at a time in the circumferential direction. Here, the immunoenzyme reaction unit 10 is rotated counterclockwise. In the example of Fig. 1, the containers 100 arranged in a single row in the radial direction of the immunoenzyme reaction unit 10 are spaced by a specified gap from one another in the circumferential direction of the immunoenzyme reaction unit 10. However, a row of the containers 100 for the first reagent and a row of the containers 100 for the second reagent which will be described later may be spaced from each other by a specified gap in the radial direction.

When the magnetic reagent is dispensed by the first reagent dispensing unit 8 into one of the container 100 into which the sample has been injected, the immunoenzyme reaction unit 10 agitates a mixture of the magnetic reagent and the sample using an agitating mechanism (not illustrated) so as to cause an immunoreaction to occur between the antigen in the sample and the magnetic reagent for a certain period of time (first immunoreaction). Next, the immunoenzyme reaction unit 10 moves this container 100 to a first magnetic collection mechanism (magnet 13) so as to magnetically collect by a magnetic force a reaction product which is a combination of the antigen and the magnetic reagent. Then, in this state, the inside of the container 100 is cleaned and unreacted substances that have not been reacted with the magnetic reagent are removed (first BF separation).

The first magnetic collection mechanism is fixed at a position corresponding to the first BF separation unit 11 disposed near an outer peripheral portion of the immunoenzyme reaction unit 10. The turn table of the immunoenzyme reaction unit 10 includes two layers, that is a fixed lower layer and a rotatable upper layer. The magnet 13 as the first magnetic collection mechanism is disposed on the lower turn table. The container 100 is disposed on the upper turn table. The magnet 13 magnetically collects the reaction product in the container 100.

The first BF separation unit 11 includes an arm 25, a nozzle 21, and a cleaning bath 24. The nozzle 21 is attached to the arm 25. The arm 25 is movable upward and downward in the vertical direction and rotatable about a central axis defined by a vertical line passing through a proximal end portion of the arm 25. This arm 25 moves the nozzle 21 to the container 100 existing at a first BF separation position of the immunoenzyme reaction unit 10 and to the cleaning bath 24 existing at a nozzle cleaning position on the first BF separation unit 11 side. At the first BF separation position, the nozzle 21 discharges and sucks a cleaning solution into and from the container 100 so as to clean the container 100 into which the sample and the magnetic reagent have been injected, thereby removing the unreacted substances that have not been reacted with the magnetic reagent (BF cleaning).

The first BF separation unit 11 performs the first BF separation when the container 100 is carried to the first BF separation position. Through the first BF separation and the BF cleaning, the reaction product which is the combination of the target antigen in the sample and the magnetic reagent is magnetically collected in the container 100. When the first BF separation is completed, the arm 25 moves the nozzle 21 to the nozzle cleaning position where the cleaning bath 24 exists.

After the first BF separation, when the labeling reagent is dispensed by the second reagent dispensing unit 9 into the container 100 where the reaction product remains, the immunoenzyme reaction unit 10 agitates the mixture of the magnetic reagent and the sample using an agitating mechanism (not illustrated) so as to cause an immunoreaction to occur between the reaction product and the labeling reagent for a certain period of time (second immunoreaction). Next, the immunoenzyme reaction unit 10 moves this container 100 to a second magnetic collection mechanism (not illustrated) so as to magnetically collect by a magnetic force an immunocomplex which is a combination of the reaction product and the labeling reagent. Then, in this state, the inside of the container 100 is cleaned and unreacted substances that have not been reacted with the labeling reagent are removed (second BF separation).

The second magnetic collection mechanism includes a magnet similar to the magnet 13 of the first magnetic collection mechanism. The second magnetic collection mechanism is fixed at a position corresponding to the second BF separation unit 12 disposed near the outer peripheral portion of the immunoenzyme reaction unit 10. In the example of Fig. 1, the magnet included in the second magnetic collection mechanism is disposed below the nozzle 21 where a second BF separation position exists.

The second BF separation unit 12 has a similar structure to that of the first BF separation unit 11 and is spaced from the first BF separation unit 11 by a specified distance in the circumferential direction. An arm 25 is movable upward and downward in the vertical direction and rotatable about a central axis defined by a vertical line passing through a proximal end portion of the arm 25. This arm 25 moves the nozzle 21 to the container 100 existing at a second BF separation position of the immunoenzyme reaction unit 10 and to the cleaning bath 24 existing at a nozzle cleaning position on the second BF separation unit 12 side. At the second BF separation position, the nozzle 21 discharges and sucks a cleaning solution into and from the container 100 so as to clean the container 100 into which the labeling reagent has been injected, thereby removing excessive unreacted substances that have not been reacted with the labeling reagent (BF cleaning).

The second BF separation unit 12 performs the second BF separation when the container 100 is carried to the second BF separation position. Through the second BF separation and the BF cleaning, the immunocomplex which is a combination of the labeling reagent and the reaction product formed of the target antigen in the sample and the magnetic reagent is magnetically collected in the container 100. When the second BF separation is completed, the arm 25 moves the nozzle 21 to a nozzle cleaning position where the cleaning bath 24 exists.

Furthermore, a substrate solution dispensing unit 26 is attached to the arm 25 of the second BF separation unit 12. The substrate solution dispensing unit 26 is disposed at a position farther from a rotating shaft of the arm 25 than the nozzle 21. The substrate solution dispensing unit 26 is connected through a tube (not illustrated) to the substrate-solution thermal-insulation storage 14 that contains the substrate solution so as to thermally insulate the substrate solution. The substrate solution dispensing unit 26 dispenses into the container 100 after the second BF separation the substrate solution containing the chemiluminescent substrate that specifically reacts with the labeling reagent for the immunocomplex which is the combination of the magnetic reagent, the antigen, and the labeling reagent (enzyme antibody). The container 100 into which the substrate solution has been injected is carried to a specified position through the rotation of the immunoenzyme reaction unit 10. The container 100 having been carried to the specified position is fed to the light emission measurement unit 16 by the container feeding unit 15.

The light emission measurement unit 16 is a light measurement unit including a photomultiplier tube (PMT) 16a as a detector and measures through photocounting a light emitting phenomenon caused by the immunocomplex and the chemiluminescent substrate. That is, the light emission measurement unit 16 measures the amount of light emission. A light measurement signal corresponding to a luminous flux (amount of light emission) detected by the light emission measurement unit 16 is digitized by an analog to digital converter (not illustrated). The digitized light measurement signal is input to the controller 40 through a serial interface or the like (not illustrated) so as to be subjected to an analytical process.

### 1-2. Structure of the Containers

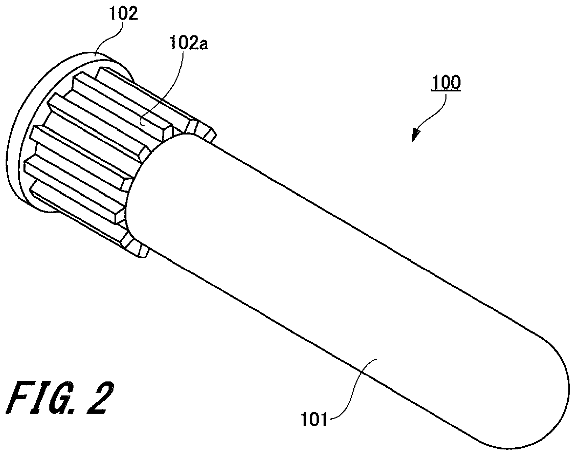

Next, a structure of the containers 100 is described with reference to Fig. 2.

Fig. 2 is a perspective view illustrating one of the containers 100 used in the automatic analysis device 1.

As illustrated in Fig. 2, the container 100 has a bottomed cylindrical shape and includes a body portion 101 and a neck portion 102. Examples of the material of the container 100 include resin and glass. The container 100 is transparent or semitransparent.

One end portion of the body portion 101 in the axial direction forms a bottom portion of the container 100 and has a substantially semispherical shape. The neck portion 102 is provided at the other end portion of the body portion 101 in the axial direction. An outer diameter of the neck portion 102 is larger than an outer diameter of the body portion 101. Accordingly, a step is formed between the neck portion 102 and the body portion 101. Grooves 102a extending in the axial direction of the neck portion 102 are formed in an outer circumferential surface of the neck portion 102.

It is sufficient that the neck portion of the container have a lager outer diameter than the outer diameter of the body portion. The neck portion does not necessarily have the grooves. The neck portion of the container may have, for example, a first outer diameter portion that is larger than the outer diameter of the body portion and a second outer diameter portion that is larger than the outer diameter of the first outer diameter portion, or the outer diameter of part of the neck portion may have a larger outer diameter than the outer diameter of the body portion.

### 1-3. Structure of the Container Supplying Unit

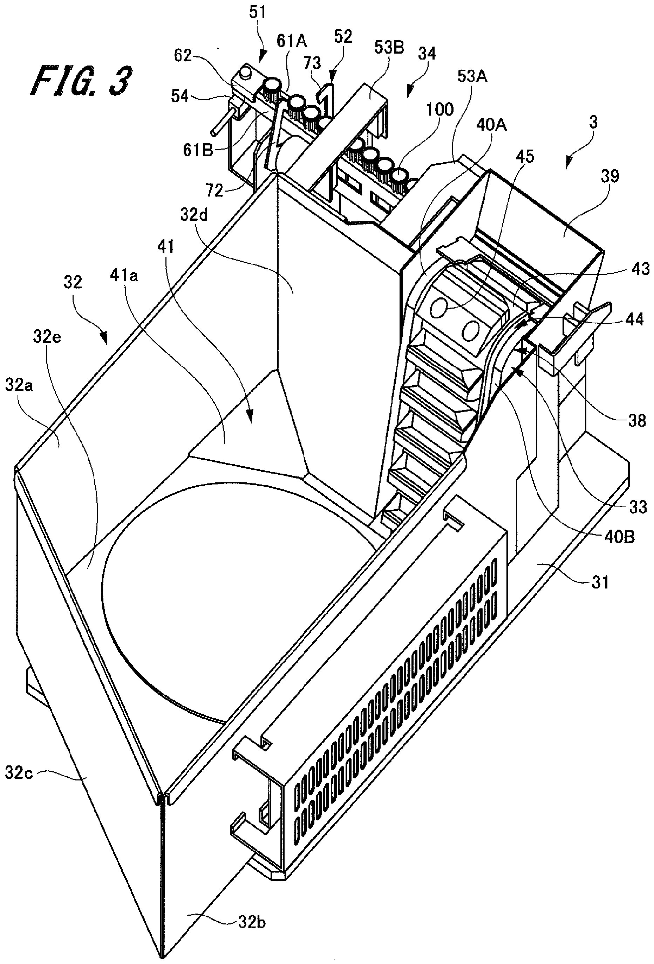

Next, a detailed structure of the container supplying unit 3 is described with reference to Figs. 3 to 11.

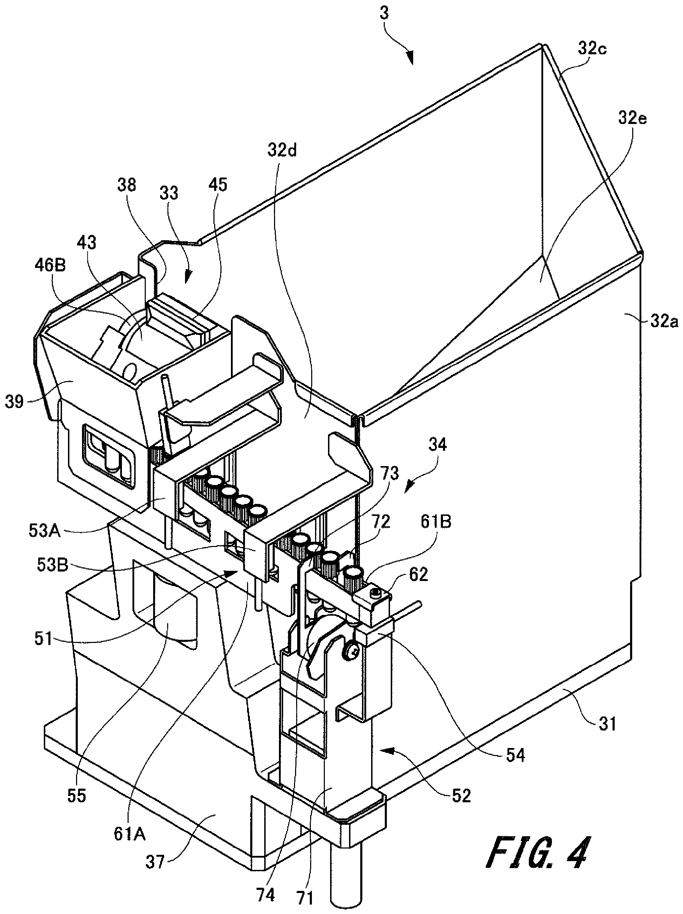

Figs. 3 and 4 are perspective views of the container supplying unit 3.

As illustrated in Figs. 3 and 4, the container supplying unit 3 includes a base part 31, a container storing part 32, a container discharging part 33, and a container aligning part 34. The base part 31 has a rectangular shape having an appropriate thickness.

### [The Container Storing Part]

The container storing part 32 has a hollow box shape that is open at the top. The plurality of containers 100 (see Fig. 2) are stored in the container storing part 32. This container storing part 32 includes four side plates 32a, 32b, 32c, and 32d and a bottom plate 32e. The side plates 32a and 32b face each other, and the side plates 32c and 32d face each other.

The side plate 32d has a cut 38 extending in the up-down direction. The container discharging part 33 is disposed in this cut 38. Furthermore, a cover member 39 that covers the cut 38 and the container discharging part 33 is attached to the side plate 32d. One end portion of an aligning rail 51 of the container aligning part 34 is disposed in the cover member 39. The aligning rail 51 will be described later.

An inner surface of the bottom plate 32e is inclined downward from the side plate 32c toward the side plate 32d. With this structure, the plurality of containers 100 stored in the container storing part 32 are guided by the bottom plate 32e so as to move toward the side plate 32d side where the container discharging part 33 is disposed. Furthermore, a container guide auxiliary member 41 is provided on the inner surface of the bottom plate 32e. The container guide auxiliary member 41 is disposed at a corner portion of the bottom plate 32e where the side plate 32a and the side plate 32d are connected to each other.

The container guide auxiliary member 41 includes a guide surface 41a. The guide surface 41a is inclined downward from the side plate 32d and the side plate 32a toward the bottom plate 32e. The containers 100 positioned at the corner portion of the bottom plate 32e are guided toward a substantial center of the container storing part 32.

The opening of the container storing part 32 is closed by a lid for a storing part (not illustrated) provided in the device exterior body 18 (see Fig. 1). In order to introduce the plurality of containers 100 to the container storing part 32, the lid for a storing part is opened, so that the opening of the container storing part 32 is exposed.

The container discharging part 33 discharges the plurality of containers stored in the container storing part 32 to the outside of the side plate 32d.

### [The Container Discharging Part]

Next, the container discharging part 33 is described.

The container discharging part 33 includes a circular belt 43, a belt support mechanism 44, a belt rotating mechanism (not illustrated), and placement members 45. The circular belt 43 is rotatably supported by the belt support mechanism 44. The belt rotating mechanism rotates the circular belt 43. The placement members 45 are provided on the circular belt 43.

The circular belt 43 has an endless shape and is looped over a drive roller and a driven roller of the belt support mechanism 44. Examples of the material of the circular belt 43 may include a rubber material, synthetic resin, metal wire, and so forth.

A plurality of placement members 45 are provided on an outer circumferential surface of the circular belt 43. The plurality of placement members 45 are spaced from one another by a specified gap in the circumferential direction of the circular belt 43. The plurality of containers 100 stored in the container storing part 32 are to be placed on the plurality of placement members 45.

The belt support mechanism 44 includes the drive roller, the driven roller, and a pair of roller support plates 46A and 46B. Each of the pair of roller support plates 46A and 46B is formed of a substantially rectangular plate body extending in the up-down direction. One of flat surfaces of the roller support plate 46A faces one of flat surfaces of the roller support plate 46B face.

The drive roller is disposed between the pair of roller support plates 46A and 46B and rotatably supported at lower portions of the pair of roller support plates 46A and 46B. The driven roller is disposed between the pair of roller support plates 46A and 46B and rotatably supported at upper portions of the pair of roller support plates 46A and 46B. With this structure, the circular belt 43 looped over the drive roller and the driven roller has a circular shape elongated in the up-down direction.

A motor included in the belt rotating mechanism (not illustrated) is connected to the drive roller. When the motor is driven, the drive roller is rotated, thereby the circular belt 43 looper over the drive roller is rotated.

As a result, an outward leg along which the placement members 45 move upward and a return leg along which the placement members 45 move downward are formed in the circular belt 43. The outward leg of the circular belt 43 is disposed in the container storing part 32, and the return leg of the circular belt 43 is disposed outside the container storing part 32.

The outward leg of the circular belt 43 is switched to the return leg through a curved portion which is an upper portion of the circular belt 43 (this curved portion is referred to as an "upper curved portion" hereafter). The return leg of the circular belt 43 is switched to the outward leg through a curved portion which is a lower portion of the circular belt 43 (this curved portion is referred to as a "lower curved portion" hereafter). The lower curved portion of the circular belt 43 together with the belt rotating mechanism is disposed below the bottom plate 32e of the container storing part 32.

The plurality of placement members 45 carry the containers 100 placed thereon in the outward leg. These containers 100 are discharged toward the cover member 39 at the upper curved portion where the outward leg changes to the return leg.

### [The Container Aligning Part]

Next, the container aligning part 34 is described with reference to Figs. 3 to 11.

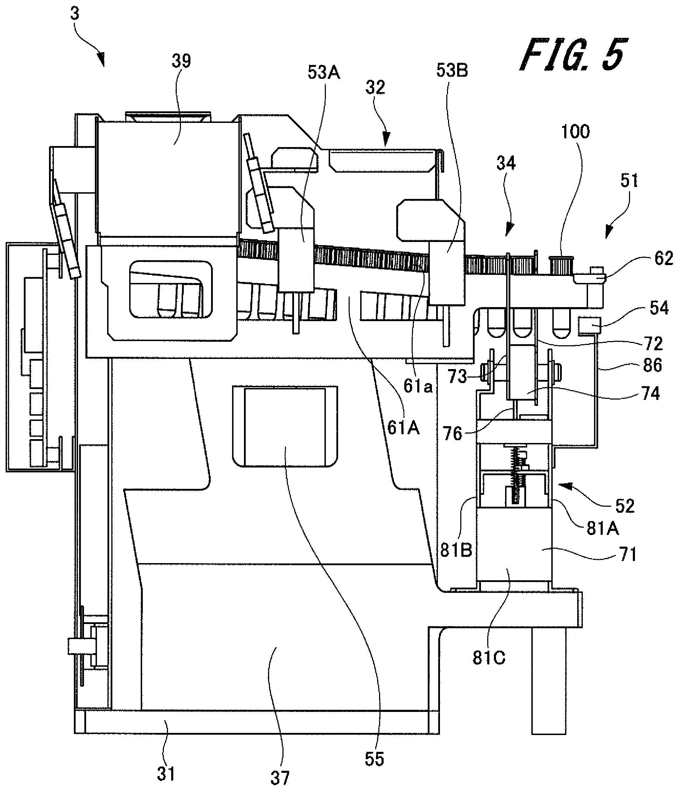

Fig. 5 is a side view of the container supplying unit 3.

As illustrated in Figs. 3 to 5, the container aligning part 34 is supported by a plurality of aligning part support members 37 provided on the base part 31 (see Fig. 4). The container aligning part 34 aligns the containers 100 discharged from the container discharging part 33. The container aligning part 34 carries the aligned containers 100 to the feeding position where the containers 100 are fed to the container carrying unit 5.

The container aligning part 34 includes the aligning rail 51, a shutter mechanism 52, number monitoring sensors 53A and 53B, a container presence/absence sensor 54, and a vibration generator 55. The vibration generator 55 vibrates the aligning rail.

The aligning rail 51 includes two flat plates 61A and 61B that face each other. These flat plates 61A and 61B each have a laterally elongated substantially rectangular shape and are disposed substantially parallel to the side plate 32d. The distance between flat surfaces of the flat plates 61A and 61B facing each other is larger than the outer diameter of the body portion 101 of each of the containers 100 and smaller than the outer diameter of the neck portion 102 of each of the containers 100.

The one end portion of the aligning rail 51 in the longitudinal direction is inserted through the above-described cover member 39 so as to be disposed inside the cover member 39. That is, each of the containers 100 discharged from the container discharging part 33 is fed to the aligning rail 51 in the cover member 39.

When the container 100 is discharged to a space between the two flat plates 61A and 61B of the aligning rail 51, the body portion 101 passes through the space between the flat plates 61A and 61B and the neck portion 102 is brought into engagement with upper ends of the flat plates 61A and 61B. Thus, the container 100 discharged to the container aligning part 34 is held by the aligning rail 51 while being oriented such that the axial direction of the container 100 is parallel to the up-down direction and the bottom portion of the container 100 is positioned on the lower side.

As illustrated in Figs. 4 to 5, the vibration generator 55 is attached to the aligning rail 51 or one of the aligning part support members 37 that support the aligning rail 51. Examples of this vibration generator 55 include, for example, a pneumatic vibrator, an electrical vibrator, a high-frequency vibrator, and so forth. Due to vibration of the aligning rail 51 caused by the vibration generator 55, the container 100 held by the aligning rail 51 gradually moves toward the other end portion of the aligning rail 51. The other end portion of the aligning rail 51 is set at the feeding position where the container 100 is fed to the above-described container carrying unit 5.

The vibration generator 55 applies asynchronous vibration to the aligning rail 51 so as to allow the container 100 to smoothly move to the feeding position. Accordingly, a force directed toward the other end portion of the aligning rail 51 constantly acts on the container 100 due to vibration applied to the aligning rail 51.

The container 100 held by the aligning rail 51 while being oriented such that the neck portion 102 is positioned on the lower side is, during a movement along the aligning rail 51, brought into contact with a side plate portion of the cover member 39 through which the aligning rail 51 is inserted. Thus, the container 100 rotates about a virtual line extending in a direction perpendicular to the two flat plates 61A and 61B of the aligning rail 51, so that the container 100 is held by the aligning rail 51 while being oriented such that the bottom portion is positioned on the lower side.

According to the present embodiment, the container 100 held by the aligning rail 51 while being oriented such that the neck portion 102 thereof is positioned on the lower side is brought into contact with the cover member 39. Alternatively, the container supplying unit and the automatic analysis device according to the present invention may include, independently of the cover member 39, an orientation correcting piece with which the container 100 being oriented such that the neck portion 102 is positioned on the lower side is brought into contact.

Furthermore, when the container 100 discharged from the container discharging part 33 does not pass through the space between the two flat plates 61A and 61B of the aligning rail 51 and moves out of the container aligning part 34, the cover member 39 guides the container 100 so that the container 100 is directed toward the aligning rail 51 again.

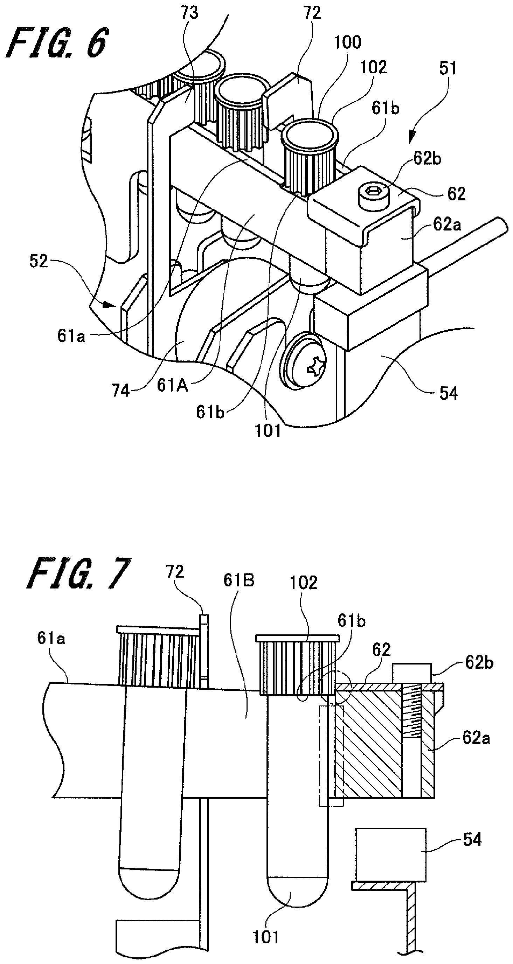

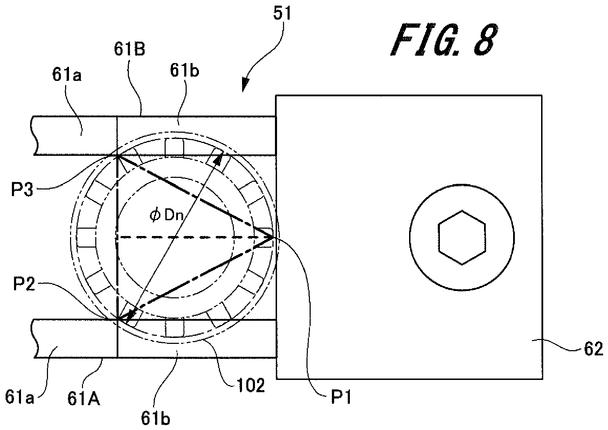

Fig. 6 is a perspective view of a rear end portion of the aligning rail 51. Fig. 7 is a sectional view of the rear end portion of the aligning rail 51. Fig. 8 is a plan view of the rear end portion of the aligning rail 51.

As illustrated in Figs. 5 to 8, an inclined surface portion 61a and a step surface portion 61b are formed at an upper end portion of each of the flat plates 61A and 61B in the up-down direction. The inclined surface portion 61a is inclined relative to the horizontal direction. The inclined surface portion 61a is inclined such that the level of the inclined surface portion 61a in the up-down direction is continuously lowered from one side toward the other side of the longitudinal direction of each of the flat plates 61A and 61B.

The step surface portion 61b is continuous with the other end of the inclined surface portion 61a in the longitudinal direction. Furthermore, the step surface portion 61b is formed at the feeding position of the aligning rail 51. The step surface portion 61b is recessed downward in the up-down direction by a single step relative to the inclined surface portion 61a and substantially parallel to the horizontal direction.

Furthermore, as illustrated in Figs. 6 to 8, a stopper member 62 is provided at the other end portion of the aligning rail 51. The stopper member 62 has a substantially flat plate shape. The stopper member 62 is fixed by a fixing screw 62b to a spacer 62a provided so as to close the gap between the flat plates 61A and 61B. The neck portion 102 of the container 100 having carried to the step surface portion 61b is brought into contact with the stopper member 62.

The container presence/absence sensor 54 is attached to a bracket 87 fixed to the shutter mechanism 52, which will be described later, and faces the container 100 disposed at the feeding position of the aligning rail 51. The container presence/absence sensor 54 is, for example, a photosensor and detects whether or not the container 100 exists at a position (feeding position) that faces the container presence/absence sensor 54.

Here, as has been described, in the container aligning part 34 according to the present example, such a force that moves the container 100 toward the other end portion of the aligning rail 51, that is, toward the stopper member 62 acts on the container 100 due to vibration of the aligning rail 51 caused by the vibration generator 55. This causes the container 100 to repeatedly performed the following operation. That is, the container 100 is pushed back in the opposite direction to the advancing direction due to reaction caused when the container 100 is brought into contact with the stopper member 62 and the container 100 is brought into contact with the stopper member 62 again. This may cause the container 100 to strongly vibrate at the other end portion of the aligning rail 51. As a result, the container 100 is not necessarily able to be held stationary at the feeding position, and accordingly, the orientation of the container 100 is not necessarily stabilized. Thus, detection errors may occur in the container presence/absence sensor 54 or the container carrying unit 5 may fail to catch the container 100.

In contrast, in the container aligning part 34 according to the present example, the neck portion 102 of the container 100 is brought into contact with the stopper member 62. Thus, the area where the stopper member 62 and the container 100 is brought into contact with each other can be reduced compared to the case where the stopper member 62 is brought into contact with the body portion 101 of the container 100. As a result, pushing back of the container 100 from the feeding position due to reaction caused by contact of the container 100 with the stopper member 62 can be suppressed.

Furthermore, in the container aligning part 34 according to the present example, the step surface portions 61b are formed at the other end portion of the aligning rail 51. Thus, the neck portion 102 of the container 100 having been carried to the feed position of the aligning rail 51 is held by the stopper member 62 and the step portions of the step surface portions 61b on the inclined surface portions 61a side. Accordingly, the amount of pushing back due to reaction caused by contact of the neck portion 102 of the container 100 with the stopper member 62 can be reduced, thereby the container 100 can be maintained in a substantially stationary state at the feeding position.

Here, it is preferable that the position where the stopper member 62 is provided and the positions where the step surface portions 61b are formed in the flat plates 61A and 61B be satisfy the following requirements. That is, as illustrated in Fig. 8, a triangle having points P1, P2, and P3 is in contact with the neck portion 102 of an outer diameter Dn. The stopper member 62 is in contact with the neck portion 102 at the point P1, and the step portions of the flat plates 61A and 61B are in contact with the neck portion 102 at the point P2 and P3. Here, the gap between the flat plates 61A and 61B of the aligning rail 51 and the outer diameter Dn of the neck portion 102 are actually fixed values. Accordingly, it is preferable that the position where the stopper member 62 is provided be adjusted by a movement along the moving direction of the container 100.

The shutter mechanism 52 is disposed near the feeding position of the aligning rail 51. The shutter mechanism 52 is closer to the cover member 39 than the feeding position of the aligning rail 51. The shutter mechanism 52 temporarily prevents the movement of the plurality of containers 100 along the aligning rail 51 and feeds the containers 100 one after another to the feeding position of the aligning rail 51.

The details of the shutter mechanism 52 are described later.

The number monitoring sensors 53A and 53B are disposed between the cover member 39 and the shutter mechanism 52. These number monitoring sensors 53A and 53B are, for example, photosensors that detect whether or not the containers 100 exist at positions that faces the number monitoring sensors 53A and 53B.

When both the number monitoring sensors 53A and 53B detect that the containers 100 exist at the positions that face the number monitoring sensors 53A and 53B, it can be determined that the number of the containers 100 before passing through the shutter mechanism 52 is equal to or more than a specified number (five according to the present embodiment). Thus, information that at least the specified number of the containers 100 are continuously supplied to a downstream process can be transmitted to a control unit that controls the downstream process.

Furthermore, when at least one of the number monitoring sensors 53A and 53B detects that there is no container 100 at the position that faces the at least one of the number monitoring sensor 53A and 53B, it can be determined that the number of the containers 100 before passing through the shutter mechanism 52 is less than the specified number. Thus, information that there will not be a continuous supply of at least the specified number of the containers 100 to the downstream process can be transmitted to the control unit that controls the downstream process.

### [The Shutter Mechanism]

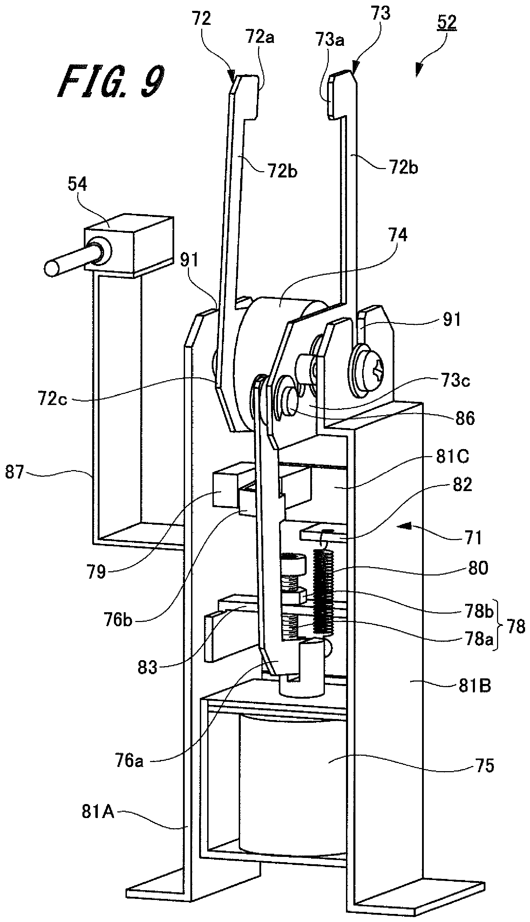

Next, the structure of the shutter mechanism 52 is described with reference to Figs. 9 to 11.

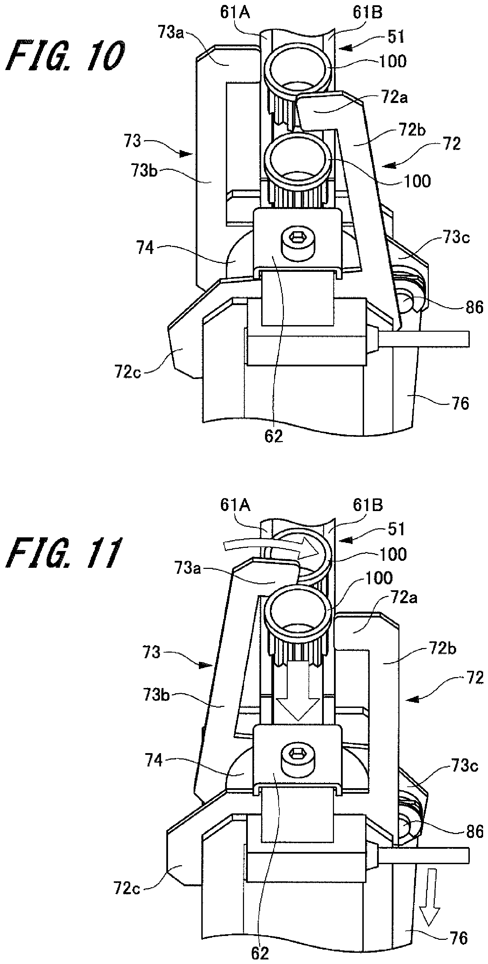

Fig. 9 is a perspective view of the shutter mechanism 52. Figs. 10 and 11 illustrate operation of the shutter mechanism 52.

As illustrated in Fig. 9, the shutter mechanism 52 includes a support frame 71, a first shutter member 72, a second shutter member 73, a rotating shaft 74, a pull-type solenoid 75, a link member 76, a stopper mechanism 78, and a home position sensor 79.

The support frame 71 has a first side surface portion 81A, a second side surface portion 81B, and a connecting surface portion 81C (see Fig. 5). The first side surface portion 81A and the second side surface portion 81B each have a substantially rectangular plate shape the long side of which extends in the up-down direction. One side of the first side surface portion 81A and one side of the second side surface portion 81B face each other. Furthermore, the connecting surface portion 81C connects the first side surface portion 81A and the second side surface portion 81B to each other.

With the first side surface portion 81A, the second side surface portion 81B, and the connecting surface portion 81C, the support frame 71 has a substantially U shape. The support frame 71 is fixed to one of the aligning part support members 37.

A spring attachment piece 82 is provided in the connecting surface portion 81C. One end portion of a tension coil spring 80 is attached to the spring attachment piece 82. Furthermore, the home position sensor 79 is fixed to the connecting surface portion 81C.

The home position sensor 79 is an optical sensor that includes a light emitter that emits light and a light receiver that receives the light emitted from the light emitter. Although an optical sensor is used as the home position sensor 79 according to the present example, this is not limiting. A mechanical sensor may be used as the home position sensor 79.

Furthermore, a stopper fixing portion 83 is provided in the one of the surfaces of the first side surface portion 81A and the surface of the second side surface portion 81B facing the one of the surfaces of the first side surface portion 81A. The stopper fixing portion 83 is disposed so as to connect the one of the surfaces of the first side surface portion 81A and the surface of the second side surface portion 81B facing the one of the surfaces of the first side surface portion 81A. The stopper mechanism 78 is fixed to the stopper fixing portion 83.

The stopper mechanism 78 includes a bolt 78a and a nut 78b attached to the bolt 78a. The bolt 78a is attached to the stopper fixing portion 83. The thread portion of the bolt 78a projects downward from the stopper fixing portion 83 in the up-down direction. The link member 76 to be described later is in contact with the bolt 78a.

Furthermore, the pull-type solenoid 75 representing an example of a driver is fixed to a lower end portion of this support frame 71 in the up-down direction. The link member 76 is attached to a drive shaft of the pull-type solenoid 75. The link member 76 includes a substantially rectangular plate body extending in the up-down direction. A lower end portion 76a of the link member 76 in the up-down direction is fixed to the pull-type solenoid 75. Furthermore, the other end portion of the tension coil spring 80 is attached to the lower end portion 76a of the link member 76.

The tension coil spring 80, which is attached to the spring attachment piece 82 of the support frame 71 and the lower end portion 76a of the link member 76, urges the link member 76 upward in the up-down direction. Furthermore, the lower end portion 76a of the link member 76 is in contact with the bolt 78a of the stopper mechanism 78 attached to the stopper fixing portion 83. This regulates an upward movement of the link member 76 in the up-down direction.

Furthermore, a light-blocking piece 76b is provided at a central portion of the link member 76 in the up-down direction. The light-blocking piece 76b blocks light emitted from the light emitter of the home position sensor 79 when brought to a position between the light emitter and the light receiver of the home position sensor 79. This allows the link member 76 to be positioned in the up-down direction, and allows the position of the link member 76 in the up-down direction to be detected.

Furthermore, an upper end portion of the link member 76 in the up-down direction is rotatably attached to a fixing piece 72c of the second shutter member 73, which will be described later, through a connecting shaft 86.

Furthermore, a bearing piece 91 is provided at an upper end portion of each of the first side surface portion 81A and the second side surface portion 81B in the up-down direction. The rotating shaft 74 is rotatably supported by the bearing pieces 91. The rotating shaft 74 is rotatably supported by the bearing pieces 91.

The bracket 87 is fixed to one surface of the first side surface portion 81A on the opposite side to the facing side. The above-described container presence/absence sensor 54 is provided on the bracket 87.

The rotating shaft 74 is disposed such that the axial direction of the rotating shaft 74 extends in the longitudinal direction of the aligning rail 51. Furthermore, the first shutter member 72 and the second shutter member 73 are fixed to the rotating shaft 74.

The second shutter member 73 is fixed to one end portion of the rotating shaft 74 in the axial direction. The first shutter member 72 is fixed to the other end portion of the rotating shaft 74 in the axial direction. The first shutter member 72 is disposed closer to the other end portion side than the second shutter member 73 in the longitudinal direction of the aligning rail 51, that is, closer to the feeding position side than the second shutter member 73.

The first shutter member 72 has a first shutter piece 72a, an arm piece 72b, and the fixing piece 72c. The fixing piece 72c is fixed to the other end portion of the rotating shaft 74 in the axial direction. The arm piece 72b projects upward in the up-down direction from the fixing piece 72c. The first shutter piece 72a is formed at an upper end portion of the arm piece 72b in the up-down direction. The first shutter piece 72a includes a plate body having a flat surface that intersects the longitudinal direction of the aligning rail 51.

As illustrated in Fig. 9, as is the case with the first shutter member 72, the second shutter member 73 has a second shutter piece 73a, an arm piece 73b, and a fixing piece 73c. The fixing piece 73c is fixed to the one end portion of the rotating shaft 74 in the axial direction. Furthermore, the upper end portion of the link member 76 is rotatably attached to the fixing piece 73c through the connecting shaft 86.

The arm piece 73b projects upward in the up-down direction from an end portion of the fixing piece 73c on the opposite side to the end portion where the link member 76 is attached with the rotating shaft 74 interposed therebetween. The second shutter piece 73a is formed at an upper end portion of the arm piece 73b in the up-down direction.

Furthermore, the first shutter piece 72a and the second shutter piece 73a are spaced apart from each other in the rotating direction of the rotating shaft 74 and disposed on both the sides of the aligning rail 51 with the aligning rail 51 interposed therebetween. The first shutter piece 72a is disposed on the flat plate 61B side of the aligning rail 51. The second shutter piece 73a is disposed on the flat plate 61A side of the aligning rail 51.

### 1-2. Operation of the Shutter Mechanism

Next, operation of the shutter mechanism 52 having the above-described structure is described with reference to Figs. 9 to 11.

First, as illustrated in Figs. 9 and 10, before the pull-type solenoid 75 is driven, the link member 76 is urged upward in the up-down direction by the tension coil spring 80. Accordingly, the fixing piece 73c of the second shutter member 73 is pressed by the link member 76, and the first shutter member 72, the second shutter member 73, and the rotating shaft 74 are rotated in a direction in which the second shutter piece 73a of the second shutter member 73 is separating from the aligning rail 51.

Thus, the first shutter piece 72a approaches the aligning rail 51 and blocks the movement of the containers 100 along the aligning rail 51 while the second shutter piece 73a does not prevent the movement of the containers 100 along the aligning rail 51. As a result, only one of the containers 100 is disposed at the feeding position of the aligning rail 51.

Since the lower end portion 76a of the link member 76 is brought into contact with the bolt 78a of the stopper mechanism 78, the upward movement of the link member 76 in the up-down direction is regulated. As a result, rotations of the first shutter member 72, the second shutter member 73, and the rotating shaft 74 are stopped at specified positions.

A projecting length of the bolt 78a from the stopper fixing portion 83 can be adjusted by adjusting the position of a portion of the bolt 78a engaged with the nut 78b of the stopper mechanism 78. This allows adjustment of the amount of the upward movement in the up-down direction of the link member 76 in contact with the bolt 78a. As a result, the amounts of the rotations of the first shutter member 72, the second shutter member 73, and the rotating shaft 74 can also be adjusted.

When the container 100 disposed at the feeding position is carried to a specified position of the immunoenzyme reaction unit 10 by the container carrying unit 5, no container 100 exists at the feeding position of the aligning rail 51. Accordingly, the container presence/absence sensor 54 detects that there is no container at the feeding position. The presence/absence information of the container 100 detected by the container presence/absence sensor 54 is transmitted to the controller 40.

Next, the controller 40 causes the pull-type solenoid 75 to drive for a specified period of time (for example, one second) when the controller 40 determines that there is no container 100 at the feeding position in accordance with the container presence/absence information of the container presence/absence sensor 54. When the pull-type solenoid 75 is driven, the drive shaft is moved downward in the up-down direction, and the link member 76 fixed to the drive shaft is pulled downward in the up-down direction against the urging force of the tension coil spring 80.

Thus, the fixing piece 73c of the second shutter member 73 is pulled downward in the up-down direction by the link member 76. This causes the first shutter member 72, the second shutter member 73, and the rotating shaft 74 to be rotated in a direction in which the second shutter piece 73a of the second shutter member 73 approaches the aligning rail 51.

Furthermore, as illustrated in Fig. 11, the first shutter piece 72a of the first shutter member 72 is moved in a direction in which the first shutter piece 72a is separating from the aligning rail 51. This allows the movement of the container 100 to the feeding position of the aligning rail 51. One of the containers 100 disposed between the first shutter piece 72a and the second shutter piece 73a in the state illustrated in Fig. 10 is moved to the feeding position.

Furthermore, the containers 100 disposed further to the rear side from the feeding position than the second shutter piece 73a of the second shutter member 73 are prevented from being moved by the second shutter piece 73a.

Furthermore, when drive of the pull-type solenoid 75 is stopped, the link member 76 is pulled upward in the up-down direction by the tension coil spring 80. As a result, the movement of the containers 100 along the aligning rail 51 is prevented by the first shutter piece 72a.

Furthermore, the length of the rotating shaft 74 in the axial direction, that is, the distance between the first shutter member 72 and the second shutter member 73 is equal to or slightly smaller than the outer diameter of the neck portions 102 of the containers 100. Thus, when the movement of the containers 100 is prevented alternately by the first shutter piece 72a and the second shutter piece 73a, the plurality of containers 100 held by the aligning rail 51 can be taken out one container after another so as to be disposed at the feeding position of the aligning rail 51. As a result, jamming of the containers 100 at the feeding position of the aligning rail 51 can be prevented with a simple structure.

As has been described, with the container supplying unit 3 according to the present example, the containers 100 are constantly supported by the aligning rail 51 until the containers 100 are carried by the container carrying unit 5 discharged from the container discharging part 33. As has been described, since the containers 100 are not moved from the aligning rail 51 to another device, the orientation of the containers 100 can be constantly maintained in a stabilized state.

Furthermore, although a link mechanism using the link member as a mechanism that rotates the rotating shaft 74 is used for the shutter mechanism 52 according to the present example, this is not limiting. Any of a variety of mechanisms such as a belt mechanism using a circular belt and pulleys, a gear mechanism using a stepping motor and a gear train, and a chain mechanism using sprockets and a chain may be used.

### 2. An Example of a Second Embodiment

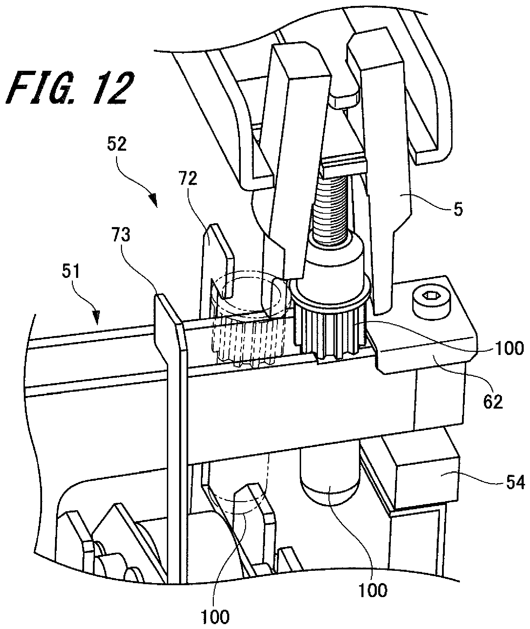

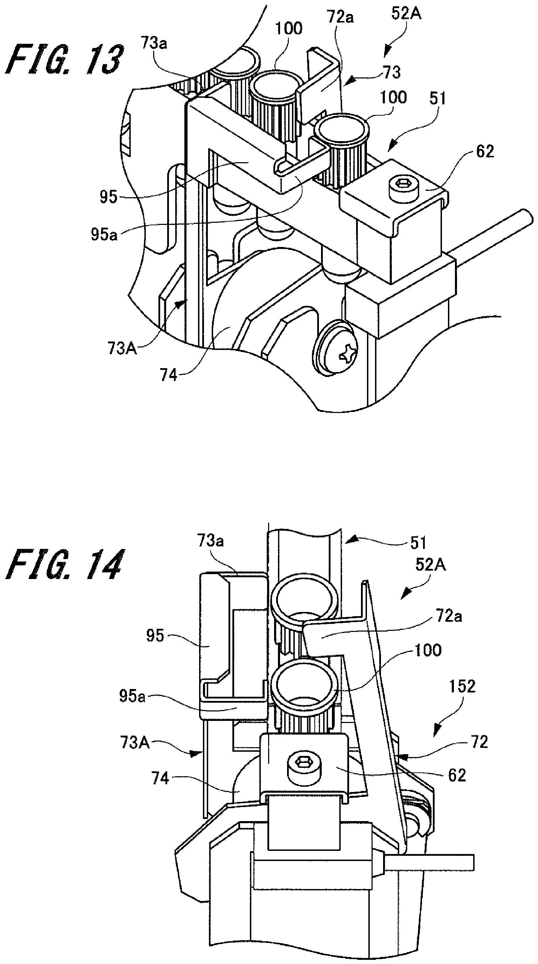

Next, a shutter mechanism according to an example of a second embodiment is described with reference to Figs. 12 to 14. Fig. 12 illustrates a state in which two containers 100 are carried to the feeding position. Figs. 13 to 14 illustrate the shutter mechanism according to the example of the second embodiment.

First, the state in which two containers 100 are carried to the feeding position is described with reference to Fig. 12.

In the case where it is determined that there is no container 100 at the feeding position due to a detection error of the container presence/absence sensor 54 or the like even when the container 100 actually exists at the feeding position as illustrated in Fig. 12, the shutter mechanism 52 is driven so as to open the first shutter piece 72a of the first shutter member 72. Accordingly, a second container 100 may be carried to the feeding position.

Furthermore, in order to prevent the containers 100 or the like from being contaminated, the container carrying unit 5 has recently been proposed with which an outer circumference of the neck portion 102 instead of the inside of the containers 100 is held for carrying. With such a container carrying unit 5, when there are two containers 100 at the feeding position, the container carrying unit 5 cannot correctly grip the containers 100.

Furthermore, in order to use such a container carrying unit 5, a gap sufficient for the container carrying unit 5 to be inserted therein needs to be provided between the container 100 existing at the feeding position of the aligning rail 51 and the container 100 to be fed to the feeding position next.

With a shutter mechanism 52A according to the example of the second embodiment, the deficiency illustrated in Fig. 12 can be eliminated. The difference between the shutter mechanism 52A according to the example of the second embodiment and the shutter mechanism 52 according to the example of the first embodiment is the structure of the second shutter member. Accordingly, description here is dedicated to the second shutter member, and the same elements as those of the shutter mechanism 52 are denoted by the same reference signs so as to omit duplicated description.

As illustrated in Figs. 13 and 14, a second shutter member 73A is fixed to the rotating shaft 74. The second shutter member 73A has a misoperation preventing stopper 95. The misoperation preventing stopper 95 is provided in the second shutter piece 73a. The misoperation preventing stopper 95 projects from the second shutter piece 73a in a direction substantially parallel to the longitudinal direction of the aligning rail 51.

Furthermore, one end portion of the misoperation preventing stopper 95 opposite to the second shutter piece 73a extends further to the other end portion side in the longitudinal direction of the aligning rail 51 than the first shutter piece 72a of the first shutter member 72, that is, extends to the feeding position side. This one end portion has a contact piece 95a. The contact piece 95a projects from the one end portion toward the aligning rail 51.

Furthermore, a projected distal end portion of the contact piece 95a faces the feeding position of the aligning rail 51. Accordingly, when the shutter mechanism 52A is driven so as to rotate the first shutter piece 72a in a direction in which the first shutter piece 72a is opened while there is the container 100 at the feeding position of the aligning rail 51, the contact piece 95a of the misoperation preventing stopper 95 is brought into contact with the container 100. This stops the rotation of the first shutter member 72, the second shutter member 73, and the rotating shaft 74.

As a result, opening of the first shutter piece 72a is prevented, and accordingly, feeding of the second container 100 to the feeding position of the aligning rail 51 while there still is the container 100 at the feeding position of the aligning rail 51 can be prevented.

Furthermore, as illustrated in Fig. 14, a projecting length of the contact piece 95a toward the aligning rail 51 is set to be equal to a projecting length of the second shutter piece 73a. When the second shutter piece 73a is opened, the contact piece 95a is disposed outside the aligning rail 51. This prevents the contact piece 95a from being brought into contact with the container 100 when the second shutter piece 73a is opened, and accordingly, the contact piece 95a can be prevented from interfering with the movement of the container 100 along the aligning rail 51.

Furthermore, with the shutter mechanism 52A according to the example of the second embodiment, in order to move the container 100 to the feeding position, the shutter mechanism 52A may be driven so as to intentionally cause the contact piece 95a to be brought into contact with the container 100 existing at the feeding position. This allows the container 100 to be held not only by the stopper member 62 and the step surface portions 61b but also by the contact piece 95a. As a result, vibration of the container 100 caused by the vibration generator 55 can be further suppressed. Accordingly, the container 100 can be maintained in a substantially stationary state at the feeding position, and the container 100 can be reliably held by the container carrying unit 5.

Since the other elements are similar to those of the shutter mechanism 52 according to the above-described example of the first embodiment, description thereof is omitted. Also with the shutter mechanism 52A having the above-described structure, similar actions and effects to those obtained with the shutter mechanism 52 according to the above-described example of the first embodiment can be obtained.

### 3. An Example of a Third Embodiment

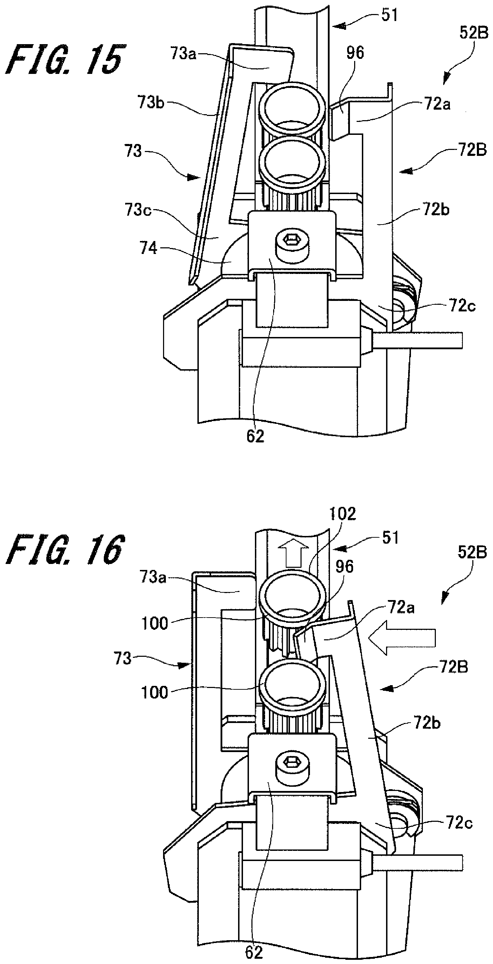

Next, a shutter mechanism according to an example of a third embodiment is described with reference to Figs. 15 to 18.

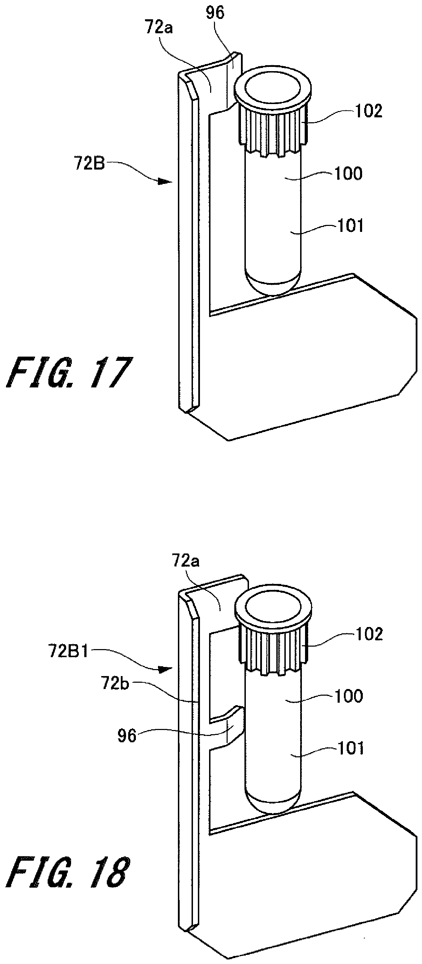

Figs. 15 and 16 illustrate the shutter mechanism according to the example of the third embodiment. Fig. 17 illustrates a first shutter member of the shutter mechanism according to the example of the third embodiment.

The difference between a shutter mechanism 52B according to the example of the third embodiment and the shutter mechanism 52 according to the example of the first embodiment is the structure of the first shutter member. Accordingly, description here is dedicated to the first shutter member, and the same elements as those of the shutter mechanism 52 are denoted by the same reference signs so as to omit duplicated description.

As illustrated in Figs. 15 to 17, a first shutter member 72B has the first shutter piece 72a, the arm piece 72b, and the fixing piece 72c. The first shutter member 72B also has a return piece 96. The return piece 96 is formed at a distal end portion of the first shutter piece 72a so as to be continuous with the first shutter piece 72a. The return piece 96 is inclined relative to a plane that intersects the longitudinal direction of the aligning rail 51.

As illustrated in Fig. 16, in the case where there are two containers 100 at the feeding position of the aligning rail 51, when the first shutter member 72B, the second shutter member 73, and the rotating shaft 74 are rotated so as to close the first shutter piece 72a, the return piece 96 is inserted between the two containers 100.

When the first shutter member 72B is further rotated, the return piece 96 presses from the feeding position toward the one end portion side of the aligning rail 51 the neck portion 102 of the container 100 that is the second container 100 from the leading container 100. This causes the second container 100 to be returned further to the one end portion side of the aligning rail 51 than the first shutter piece 72a. As a result, only one of the containers 100 can be disposed at the feeding position of the aligning rail 51.

Fig. 18 illustrates a modification of the first shutter member according to the example of the third embodiment.

As illustrated in Fig. 18, in a first shutter member 72B1 according to the modification, the return piece 96 is provided in the arm piece 72b. With the first shutter member 72B1 according to the modification, the return piece 96 is brought into contact with the body portion 101 of the container 100.

Since the other elements are similar to those of the shutter mechanism 52 according to the above-described example of the first embodiment, description thereof is omitted. Also with the shutter mechanism 52B or 52B1 having the above-described structure, similar actions and effects to those obtained with the shutter mechanism 52 according to the above-described example of the first embodiment can be obtained.

### 4. An Example of a Fourth Embodiment

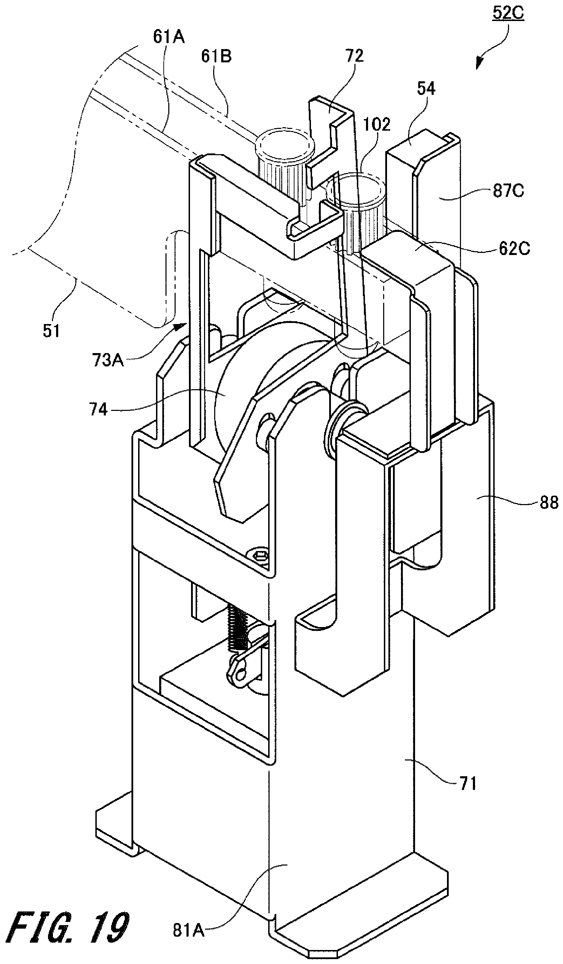

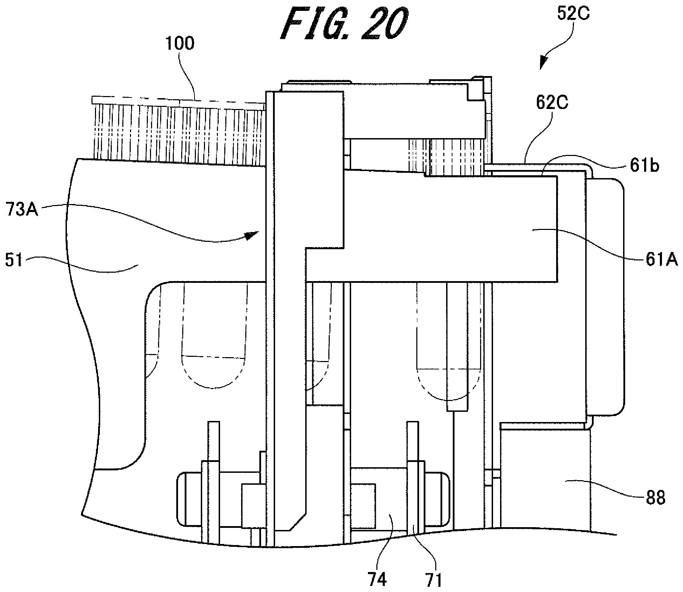

Next, a shutter mechanism according to an example of a fourth embodiment is described with reference to Figs. 19 and 20.

Figs. 19 and 20 illustrate the shutter mechanism according to the example of the fourth embodiment.

Here, according to the above-described examples of the embodiments, the stopper member 62 to be in contact with the container 100 is fixed to the aligning rail 51. Accordingly, the stopper member 62 vibrates together with the aligning rail 51 by the vibration generator 55. Thus, when the container 100 is held at the feeding position, vibration of the stopper member 62 is transmitted to the container 100.

In a container aligning part according to the example of the fourth embodiment, a stopper member is provided in the shutter mechanism according to the example of the second embodiment. Accordingly, description here is dedicated to the shutter mechanism, and the same elements as those of the shutter mechanism 52A according to the example of the second embodiment are denoted by the same reference signs so as to omit duplicated description.

As illustrated in Figs. 19 and 20, a shutter mechanism 52C includes a rotating shaft 84 and the support frame 71 by which the first shutter member 72 and the second shutter member 73A are rotatably supported. A holding member 88 is provided on the first side surface portion 81A of the support frame 71. The holding member 88 is fixed to the one surface of the first side surface portion 81A on the opposite side to the facing side.

Furthermore, a stopper member 62C is fixed to the holding member 88. The stopper member 62C projects upward in the up-down direction from the holding member 88 and has an upper end portion in the up-down direction that is bent toward the aligning rail 51.

The stopper member 62C faces the step surface portions 61b of the flat plates 61A and 61B of the aligning rail 51 with a gap formed therebetween in the up-down direction. Thus, the stopper member 62C is fixed to the shutter mechanism 52C that is not vibrated, and the stopper member 62C is not in contact with the aligning rail 51 that is vibrated. As a result, the stopper member 62C is not vibrated, and accordingly, the container 100 existing at the feeding position of the aligning rail 51 can be maintained in a substantially stationary state.

In the shutter mechanism 52C, a bracket 87C to which the container presence/absence sensor 54 is fixed is disposed on one side in the short side direction of the first side surface portion 81A. Thus, the container presence/absence sensor 54 faces the container 100 disposed at the feeding position of the aligning rail 51 in a direction perpendicular to the up-down direction and the longitudinal direction of the aligning rail 51.

Here, when the container presence/absence sensor 54 faces in the longitudinal direction of the aligning rail 51 the container 100 disposed at the feeding position of the aligning rail 51, there is a possibility the container presence/absence sensor 54 detecting the container 100 disposed next to the feeding position.

When the container presence/absence sensor 54 faces the container 100 disposed at the feeding position of the aligning rail 51 in a direction perpendicular to the up-down direction and the longitudinal direction of the aligning rail 51, the container 100 disposed next to the feeding position is not detected. This can suppress detection errors of the container presence/absence sensor 54.

Furthermore, the container presence/absence sensor 54 is disposed so as to face the neck portion 102. This neck portion 102 is held by the stopper member 62C and the step surface portions 61b, and accordingly, the degree of vibration of the neck portion 102 is smaller than that of the body portion 101. This can suppress detection errors caused by the vibration of the container 100.

Since the other elements are similar to those of the shutter mechanism 52 according to the above-described example of the first embodiment, description thereof is omitted. Also with the container aligning part that includes the shutter mechanism 52C having the above-described structure, similar actions and effects to those obtained with the container aligning part according to the above-described example of the first embodiment can be obtained.

The present invention is not limited to the embodiments having been described above and illustrated in the drawings. A variety of modified embodiments are possible without departing from the gist of the invention described in the claims. For example, according to the above-described embodiments, the examples are described in which the automatic analysis device is used for an immunoanalyzer used to analyze biological samples such as blood and urine. However, the automatic analysis device according to the present invention is not limited to the above-described embodiments. The automatic analysis device according to the present invention can be used for devices for variety of other analyses such as an analysis of water quality and an analysis of food.

### Reference Signs List

1 automatic analysis device, 2 measurement device, 3 container supplying unit, 4 sample holding unit, 5 container carrying unit, 6 sample dispensing unit, 7 reagent thermal-insulation unit, 18 device exterior body, 31 base part, 32 container storing part, 32a, 32b, 32c, 32d side plate, 32e bottom plate, 33 container discharging part, 34 container aligning part, 39 cover member, 51 aligning rail, 52, 52A, 52B, 52C shutter mechanism, 54 container presence/absence sensor, 55 vibration generator, 61a inclined surface portion, 61A, 61B flat plate, 61b step surface portion, 62, 62C stopper member, 71 support frame, 72 first shutter member, 72a first shutter piece, 73 second shutter member, 74 rotating shaft, 75 pull-type solenoid (driver), 76 link member, 78 stopper mechanism, 95 misoperation preventing stopper, 96 return piece, 100 container, 101 body portion, 102 neck portion

## Claims

1. An automatic analysis device (1) comprising:
a reaction unit (10) that holds a container : (100) into which a sample and a reagent are dispensed; and
a container supplying unit (3) that supplies the container to the reaction unit,
wherein the container supplying unit (3) includes
a container storing part (32) that stores a plurality of containers;
a container discharging part (33) that discharges the plurality of containers stored in the container storing part (32) ; and
a container aligning part (34) that aligns the containers discharged from the container discharging part (33),
wherein the container aligning part (34) includes
an aligning rail (51) that supports the containers discharged from the container discharging part (33) while allowing a movement of the containers to a feeding position where the containers are fed to the reaction unit, and
a shutter mechanism (52) that is provided closer to a container discharging part (33) side than the feeding position in the aligning rail (51) and that temporarily prevents the movement of the containers supported by the aligning rail (51), **characterised in that** the shutter mechanism (52) includes
a support frame (71),
a rotating shaft (74) rotatably supported by the support frame (71),
a first shutter member (72) that is fixed to the rotating shaft (74) and that has a first shutter piece (72a) which prevents and allows the movement of the containers,
a second shutter member (73) that is fixed to the rotating shaft (74) at a position spaced further apart from the feeding position than the first shutter member (72) and that has a second shutter piece (73a) which prevents and allows the movement of the containers, and
a driver (75) that rotates the rotating shaft (74), the first shutter member (72), and the second shutter member (73), wherein the first shutter piece (72a) and the second shutter piece (73a) are spaced apart from each other in the rotating direction of the rotating shaft (74) and disposed on both the sides of the aligning rail (51) with the aligning rail (51) interposed therebetween.

2. The automatic analysis device according to Claim 1, wherein an axial direction of the rotating shaft (74) is parallel to a direction in which the aligning rail (51) extends.

3. The automatic analysis device according to Claim 1,
wherein the second shutter member (73a) includes
a misoperation preventing stopper (95) that is brought into contact with the containers disposed at the feeding position, the misoperation preventing stopper (95) projecting from the second shutter piece (73a) in a direction parallel to the longitudinal direction of the aligning rail (51), and one end portion thereof opposite to the second shutter piece (73a) extending to the other end portion side in the longitudinal direction of the aligning rail (51) than the first shutter piece (72a) and having a contact piece (95a) projecting from the one end portion toward the aligning rail (51) wherein a projected distal end portion of the contact piece (95a) faces the feeding position of the aligning rail (51), such that when the shutter mechanism (52a) is driven so as to rotate the first shutter piece (72a) in a direction in which the first shutter piece (72a) is opened while there is the container at the feeding position of the aligning rail (51), the contact piece (95a) of the misoperation preventing stopper (95) is brought into contact with the container disposed at the feeding position, thereby stopping the rotation of the first shutter member (72), the second shutter member (73), and the rotating shaft (74), and as a result, opening of the first shutter piece (72a) is prevented, and feeding of a second container to the feeding position of the aligning rail (51) while there still is the container at the feeding position of the aligning rail (51) is prevented.

4. The automatic analysis device according to Claim 1,
wherein the first shutter member (72b) includes a return piece (96) that returns from the feeding position to the container discharging part side one container fed to the feeding position later out of two of the containers disposed at the feeding position, the return piece (96) formed at a distal end portion of the first shutter piece (72a) so as to be continuous with the first shutter piece (72a) and inclined relative to a plane that intersects the longitudinal direction of the aligning rail (51), and configured such that in a case where there are two containers at the feeding position of the aligning rail (51), when the first shutter member (72), the second shutter member (73), and the rotating shaft (74) are rotated so as to close the first shutter piece (72a), the return piece (96) is inserted between the two containers, and when the first shutter member (72) is further rotated, the return piece (96) presses a neck portion of the second container of the two containers, fed to the feeding position later, toward the container discharging part side of the aligning rail (51) from the feeding position of the aligning rail (51), thereby causing the second container to be returned further toward the container discharging part side of the aligning rail (51) than the first shutter piece (72a), and only the first container of the two containers, fed to the feeding position first, to be disposed at the feeding position of the aligning rail (51).

5. The automatic analysis device according to Claim 1,
wherein the aligning rail (51) includes an inclined surface portion (61a) inclined such that, from the container discharging part side toward the feeding position, a level of the inclined surface portion (61a) in an up-down direction is lowered, and a step surface portion (61b) recessed downward in the up-down direction by a single step from the inclined surface portion (61a).

## Patentansprüche

1. Automatisches Analysegerät, umfassend:
eine Reaktionseinheit (10), die einen Behälter (100) fasst, in den eine Probe und ein Reagenz abgegeben werden; und
eine Behälterzuführeinheit (3), die den Behälter an die Reaktionseinheit liefert,
wobei die Behälterzuführeinheit (3) umfasst:
ein Behälterspeicherteil (32), das eine Mehrzahl von Behältern speichert;
ein Behälterausgabeteil (33), das die Mehrzahl von Behältern, die in dem Behälterspeicherteil (32) gespeichert sind, ausgibt; und
ein Behälterausrichtteil (34), das die aus dem Behälterausgabeteil (33) ausgegebenen Behälter ausrichtet, wobei das Behälterausrichtteil (34) umfasst:
eine Ausrichtschiene (51), die die aus dem Behälterausgabeteil (33) ausgegebenen Behälter trägt und gleichzeitig eine Bewegung der Behälter in eine Zuführposition ermöglicht, in der die Behälter der Reaktionseinheit zugeführt werden, und
einen Verschlussmechanismus (52), der an der Ausrichtungsschiene näher an einer Seite des Behälterausgabeteils (33) vorgesehen ist als die Zuführposition und der die Bewegung der von der Ausrichtschiene (51) getragenen Behälter vorübergehend verhindert,
**dadurch gekennzeichnet, dass**
der Verschlussmechanismus (52) umfasst:
einen Tragrahmen (71),
eine Drehwelle (74), die drehbar am Tragrahmen (71) gelagert ist,
ein erstes Verschlusselement (72), das an der Drehwelle (74) befestigt ist und das ein erstes Verschlussteil (72a) aufweist, das die Bewegung der Behälter verhindert und erlaubt,
ein zweites Verschlusselement (73), das an der Drehwelle (74) an einer Position befestigt ist, die weiter von der Zuführposition beabstandet ist als das erste Verschlusselement (72), und das ein zweites Verschlussteil (73a) aufweist, das die Bewegung der Behälter verhindert und erlaubt, und
einen Mitnehmer (75), der die Drehwelle (74), das erste Verschlusselement (72) und das zweite Verschlusselement (73) dreht,
wobei das erste Verschlussteil (72a) und das zweite Verschlussteil (73a) in Drehrichtung der Drehwelle (74) voneinander beabstandet und auf beiden Seiten der Ausrichtschiene (51) angeordnet sind, wobei die Ausrichtungsschiene (51) dazwischen angeordnet ist.

2. Automatisches Analysegerät nach Anspruch 1,
bei dem eine Axialrichtung der Drehwelle (74) parallel zu einer Richtung ist, in der sich die Ausrichtungsschiene (51) erstreckt.

3. Automatisches Analysegerät nach Anspruch 1,
bei dem das zweite Verschlusselement (73a) einen Betriebsstörungsverhinderungsstopper (95) aufweist, der mit den an der Zuführposition angeordneten Behältern in Kontakt gebracht wird,
wobei der Betriebsstörungsverhinderungsstopper (95) von dem zweiten Verschlussteil (73a) in einer Richtung parallel zur Längsrichtung der Ausrichtschiene (51) vorsteht und ein Endabschnitt davon, der dem zweiten Verschlussteil (73a) gegenüberliegt, sich zu der anderen Endabschnittsseite in der Längsrichtung der Ausrichtschiene (51) als das erste Verschlussteil (72a) erstreckt und ein Kontaktstück (95a) aufweist, das von dem einen Endabschnitt in Richtung auf die Ausrichtschiene (51) vorsteht, wobei ein vorstehender distaler Endabschnitt des Kontaktstücks (95a) der Zuführposition der Ausrichtschiene (51) so zugewandt ist, dass, wenn der Verschlussmechanismus (52a) so angetrieben wird, dass er das erste Verschlussteil (72a) in eine Richtung dreht, in der das erste Verschlussteil (72a) geöffnet wird, während sich der Behälter in der Zuführposition der Ausrichtschiene (51) befindet, das Kontaktstück (95a) des Betriebsstörungsverhinderungsstoppers (95) mit dem in der Zuführposition angeordneten Behälter in Kontakt gebracht wird, wodurch die Drehung des ersten Verschlusselements (72), des zweiten Verschlusselements (73) und der Drehwelle (74) gestoppt wird, und als Ergebnis das Öffnen des ersten Verschlusselements (72a) verhindert wird, und das Zuführen eines zweiten Behälters in die Zuführposition der Ausrichtungsschiene (51) verhindert wird, während sich der Behälter noch in der Zuführposition der Ausrichtungsschiene (51) befindet.

4. Automatisches Analysegerät nach Anspruch 1,
bei dem das erste Verschlusselement (72b) ein Rückstellteil (96) umfasst, das von zwei der an der Zuführposition angeordneten Behältern den der Zuführposition später zugeführten zur Seite des Behälterausgabeteils zurückstellt, wobei das Rückstellteil (96) an einem distalen Endabschnitt des ersten Verschlussteils (72a) so ausgebildet ist, dass es mit dem ersten Verschlussteil (72a) kontinuierlich ist und relativ zu einer Ebene geneigt ist, die die Längsrichtung der Ausrichtungsschiene (51) kreuzt, und so konfiguriert ist, dass in einem Fall, in dem sich zwei Behälter an der Zuführposition der Ausrichtschiene (51) befinden, wenn das erste Verschlusselement (72), das zweite Verschlusselement (73) und die Drehwelle (74) so gedreht werden, dass das erste Verschlussteil (72a) geschlossen wird, das Rückstellteil (96) zwischen die beiden Behälter eingeführt wird, und wenn das erste Verschlusselement (72) weiter gedreht wird, das Rückstellteil (96) einen Halsabschnitt des zweiten, später der Zuführposition zugeführten Behälters der beiden Behälter von der Zuführposition der Ausrichtschiene (51) aus zur Seite des Behälterausgabeteils der Ausrichtschiene (51) drückt und dadurch bewirkt, dass der zweite Behälter weiter zur Seite des Behälterausgabeteils der Ausrichtschiene (51) zurückgestellt wird als das erste Verschlussteil (72a), und dass nur der erste, zuerst der Zuführposition zugeführte der beiden Behälter an der Zuführposition der Ausrichtschiene (51) angeordnet wird.

5. Automatisches Analysegerät nach Anspruch 1,
bei dem die Ausrichtschiene (51) einen geneigten Oberflächenabschnitt (61a), der so geneigt ist, dass ein Niveau des geneigten Oberflächenabschnitts (61a) in einer Aufwärts-Abwärts-Richtung von der Seite des Behälterausgabeteils in Richtung der Zuführposition abgesenkt ist, und einen Stufenflächenabschnitt (61b) aufweist, der in der Aufwärts-Abwärts-Richtung um eine einzige Stufe von dem geneigten Oberflächenabschnitt (61a) nach unten versetzt ist.

## Revendications

1. Dispositif d'analyse automatique (1) comprenant :
une unité de réaction (10) qui maintient un récipient (100) dans lequel un échantillon et un réactif sont distribués ; et
une unité d'alimentation de récipient (3) qui amène le récipient à l'unité de réaction,
dans lequel l'unité d'alimentation de récipient (3) comprend :
une partie de stockage de récipients (32) qui stocke une pluralité de récipients ;
une partie de décharge de récipients (33) qui décharge la pluralité de récipients stockés dans la partie de stockage de récipients (32) ; et
une partie d'alignement de récipients (34) qui aligne les récipients déchargés de la partie de décharge de récipients (33),
dans lequel la partie d'alignement de récipients (34) comprend :
un rail d'alignement (51) qui supporte les récipients déchargés de la partie de décharge de récipients (33) tout en permettant un mouvement des récipients dans une position d'alimentation dans laquelle les récipients sont amenés à l'unité de réaction, et
un mécanisme d'obturateur (52) qui est prévu plus à proximité du côté de la partie de décharge de récipients (33) que la position d'alimentation dans le rail d'alignement (51) et qui empêche temporairement le mouvement des récipients supportés par le rail d'alignement (51),
**caractérisé en ce que** :
le mécanisme d'obturateur (52) comprend :
un bâti de support (71),
un arbre rotatif (74) supporté, en rotation, par le bâti de support (71),
un premier élément d'obturateur (72) qui est fixé sur l'arbre rotatif (74) et qui a une première pièce d'obturateur (72a) qui empêche et permet le déplacement des récipients,
un second élément d'obturateur (73) qui est fixé sur l'arbre rotatif (74) dans une position plus espacée de la position d'alimentation que le premier élément d'obturateur (72) et qui a une seconde pièce d'obturateur (73a) qui empêche et permet le déplacement des récipients, et
un dispositif d'entraînement (75) qui fait tourner l'arbre rotatif (74), le premier élément d'obturateur (72) et le second élément d'obturateur (73),
dans lequel la première pièce d'obturateur (72a) et la seconde pièce d'obturateur (73a) sont espacées l'une de l'autre dans la direction rotative de l'arbre rotatif (74) et disposées des deux côtés du rail d'alignement (51) avec le rail d'alignement (51) intercalé entre elles.

2. Dispositif d'analyse automatique selon la revendication 1,
dans lequel une direction axiale de l'arbre rotatif (74) est parallèle à une direction dans laquelle le rail d'alignement (51) s'étend.

3. Dispositif d'analyse automatique selon la revendication 1,
dans lequel le second élément obturateur (73a) comprend :
une butée anti-dysfonctionnement (95) qui est amenée en contact avec les récipients disposés dans la position d'alimentation, la butée anti-dysfonctionnement (95) faisant saillie de la seconde pièce d'obturateur (73a) dans une direction parallèle à la direction longitudinale du rail d'alignement (51) et sa une partie d'extrémité opposée à la seconde pièce d'obturateur (73a) s'étendant vers le côté de l'autre partie d'extrémité dans la direction longitudinale du rail d'alignement (51) par rapport à la première pièce d'obturateur (72a) et ayant une pièce de contact (95a) faisant saillie de la une partie d'extrémité vers le rail d'alignement (51), dans lequel une partie d'extrémité distale en saillie de la pièce de contact (95a) fait face à la position d'alimentation du rail d'alignement (51), de sorte que lorsque le mécanisme d'obturateur (52a) est entraîné afin de faire tourner la première pièce d'obturateur (72a) dans une direction dans laquelle la première pièce d'obturateur (72a) est ouverte alors que le récipient est dans la position d'alimentation du rail d'alignement (51), la pièce de contact (95a) de la butée anti-dysfonctionnement (95) est amenée en contact avec le récipient disposé dans la position d'alimentation, arrêtant ainsi la rotation du premier élément d'obturateur (72), du second élément d'obturateur (73) et de l'arbre de rotation (74), et pour cette raison, l'ouverture de la première pièce d'obturateur (72a) est empêchée, et l'alimentation d'un second récipient dans la position d'alimentation du rail d'alignement (51) alors que le récipient est toujours dans la position d'alimentation du rail d'alignement (51) est empêchée.

4. Dispositif d'analyse automatique selon la revendication 1,
dans lequel le premier élément d'obturateur (72b) comprend :
une pièce de retour (96) qui revient de la position d'alimentation au côté de la partie de décharge de récipients, un récipient étant alimenté dans la position d'alimentation plus tard parmi deux des récipients disposés dans la position d'alimentation, la pièce de retour (96) étant formée dans une partie d'extrémité distale de la première pièce d'obturateur (72a) afin d'être continue avec la première pièce d'obturateur (72a) et inclinée par rapport à un plan qui coupe la direction longitudinale du rail d'alignement (51) et configuré de sorte que dans un cas dans lequel il y a deux récipients dans la position d'alimentation du rail d'alignement (51), lorsque le premier élément d'obturateur (72), le second élément d'obturateur (73) et l'arbre rotatif (74) sont entraînés en rotation afin de fermer la première pièce d'obturateur (72a), la pièce de retour (96) est insérée entre les deux récipients, et lorsque le premier élément d'obturateur (72) continue à tourner, la pièce de retour (96) comprime une partie de goulot du second récipient des deux récipients, alimentés dans la position d'alimentation plus tard, vers le côté de la partie de décharge de récipients du rail d'alignement (51) depuis la position d'alimentation du rail d'alignement (51), amenant ainsi le second récipient à être ramené davantage vers le côté de la partie de décharge de récipients du rail d'alignement (51) que la première pièce d'obturateur (72a), et seul le premier récipient des deux récipients, alimenté dans un premier temps dans la position d'alimentation, à être disposé dans la position d'alimentation du rail d'alignement (51).

5. Dispositif d'analyse automatique selon la revendication 1,
dans lequel le rail d'alignement (51) comprend une partie de surface inclinée (61a) inclinée de sorte que, du côté de la partie de décharge de récipients vers la position d'alimentation, un niveau de la partie de surface inclinée (61a) dans la direction de haut en bas est abaissé, et une partie de surface de gradin (61b) est enfoncée vers le bas dans la direction de haut en bas par un gradin unique depuis la partie de surface inclinée (61a).
